# DEMANDE DE BREVET EUROPEEN

(11) **EP 4 749 251 A1**
(43) Date de publication de la demande: **27.05.2026**
(21) Numéro de dépôt: 25217266.3
(22) Date de dépôt: 20.11.2025
(51) Int. Cl.: G01F 23/28

(54) **METHODE DE DETECTION DE L'ETAT DE REMPLISSAGE D'UN RESERVOIR**

(30) Priorité: 26.11.2024 FR 2412998
(71) Demandeur: Commissariat à l'Energie Atomique et aux Energies Alternatives, 75015 Paris (FR)
(72) Inventeur: BEN HASSEN, Wafa, 91191 GIF-SUR-YVETTE CEDEX (FR); BENOIT, Jaume, 91191 GIF-SUR-YVETTE Cedex (FR); SPASEVSKI, Cyril, 91191 GIF-SUR-YVETTE Cedex (FR)
(74) Mandataire: Atout PI Laplace

(57) **Abrégé**

Méthode de détection de l'état de remplissage d'un réservoir comprenant un conducteur électrique agencé dans ou sur la paroi du réservoir selon un enroulement en spires, la méthode comprenant les étapes de, à un instant courant :
Injecter (701) un signal à une première extrémité du conducteur électrique,
Mesurer (702) le signal après sa propagation dans le conducteur électrique,
Analyser (703) la mesure du signal pour identifier un pic d'amplitude caractéristique d'une réflexion ou d'une transmission du signal sur une seconde extrémité du conducteur électrique opposée à la première extrémité, mesurer le temps de vol associé audit pic,
Comparer (704) le temps de vol mesuré à l'instant courant à un temps de vol mesuré sur un même pic d'amplitude pour une mesure réalisée à un instant antérieur,
Caractériser (705) l'état de remplissage du réservoir à partir de la comparaison des temps de vol.

## Description

L'invention concerne le domaine des réservoirs sous pression et plus précisément les méthodes de détection de l'état de remplissage d'un tel réservoir.

L'invention concerne également le domaine des techniques d'analyse de déformations par réflectométrie ou transférométrie qui impliquent des méthodes de traitement de signal pour analyser les signaux réfléchis ou transmis dans un conducteur électrique.

Un problème général à résoudre concerne la détection de l'état de remplissage d'un réservoir par des moyens automatisés sans intervention humaine.

La surveillance du cycle de remplissage d'un réservoir est d'intérêt notamment, mais pas exclusivement, dans les domaines des transports ou de la production et stockage d'énergie. Le réservoir est par exemple un réservoir de gaz à haute pression ou un réservoir contenant un liquide.

La référence [1] présente un dispositif d'instrumentation d'un réservoir par fibre optique permettant de caractériser des défauts sur un réservoir. Un inconvénient de cette solution est le prix élevé des interrogateurs utilisés et la courbure limitée de la fibre optique pour des réservoirs cylindriques.

La référence [2] propose une autre solution basée sur des capteurs à ondes guidées. L'inconvénient de cette solution est la distribution complexe des capteurs pour assurer une couverture complète du réservoir. Par ailleurs les deux solutions précitées ne permettent pas de déterminer l'état de remplissage du réservoir mais uniquement de caractériser des défauts de déformations de la structure du réservoir.

La demande de brevet FR3028034 du Demandeur décrit une méthode de mesure du volume d'un liquide incliné dans un réservoir au moyen d'un dispositif de réflectométrie. Cette méthode est basée sur la détection des points d'interface entre le liquide et l'air et ne s'appliquent pas à des réservoirs de gaz.

L'invention a notamment pour but de proposer une méthode de détection de l'état de remplissage d'un réservoir qui soit faiblement complexe et qui permette une détection automatisée de façon précise.

L'invention a pour objet une méthode de détection de l'état de remplissage d'un réservoir comprenant un conducteur électrique agencé dans ou sur la paroi du réservoir selon un enroulement en spires, la méthode comprenant les étapes de, à un instant courant :
- Injecter un signal à une première extrémité du conducteur électrique,
- Mesurer le signal après sa propagation dans le conducteur électrique,
- Analyser la mesure du signal pour identifier un pic d'amplitude caractéristique d'une réflexion ou d'une transmission du signal sur une seconde extrémité du conducteur électrique opposée à la première extrémité, mesurer le temps de vol associé audit pic,
- Comparer le temps de vol mesuré à l'instant courant à un temps de vol mesuré sur un même pic d'amplitude pour une mesure réalisée à un instant antérieur,
- Caractériser l'état de remplissage du réservoir à partir de la comparaison des temps de vol.

Selon un aspect particulier de l'invention, l'étape de caractériser l'état de remplissage du réservoir comprend la comparaison de la différence entre le temps de vol mesuré à l'instant courant et le temps de vol mesuré à l'instant antérieur à au moins un seuil prédéterminé.

Selon un aspect particulier de l'invention, la mesure réalisée à un instant antérieur est une mesure de référence réalisée respectivement pour un réservoir vide ou un réservoir rempli.

Dans une variante de réalisation, la méthode selon l'invention comprend la détection d'un état rempli du réservoir lorsque la mesure de référence est réalisée pour un réservoir vide et le temps de vol mesuré à l'instant courant est supérieur au temps de vol mesuré à l'instant antérieur d'au moins la valeur dudit seuil.

Dans une variante de réalisation, la méthode selon l'invention comprend la détection d'un état vide du réservoir lorsque la mesure de référence est réalisée pour un réservoir rempli et le temps de vol mesuré à l'instant courant est inférieur au temps de vol mesuré à l'instant antérieur d'au moins la valeur dudit seuil.

Dans une variante de réalisation, la méthode selon l'invention comprend la détection d'une phase de remplissage du réservoir lorsque le temps de vol mesuré à l'instant courant est supérieur au temps de vol mesuré à l'instant antérieur d'au moins une valeur prédéfinie.

Dans une variante de réalisation, la méthode selon l'invention comprend la détection d'une phase de vidange du réservoir lorsque le temps de vol mesuré à l'instant courant est inférieur au temps de vol mesuré à l'instant antérieur d'au moins une valeur prédéfinie.

Dans une variante de réalisation, la méthode selon l'invention comprend en outre la comparaison des amplitudes respectives du pic d'amplitude mesuré à l'instant courant et à un instant antérieur, l'état de remplissage du réservoir étant en outre caractérisé à partir de la comparaison desdites amplitudes.

Selon un aspect particulier de l'invention, l'étape d'analyser la mesure du signal est réalisée au moyen d'un réflectogramme caractérisant le signal rétro-propagé et mesuré à la première extrémité du conducteur électrique après sa réflexion sur la seconde extrémité du conducteur électrique.

Selon un aspect particulier de l'invention, l'étape d'analyser la mesure du signal est réalisée au moyen d'un transférogramme caractérisant le signal transmis à travers le conducteur électrique et mesuré à sa seconde extrémité.

L'invention a aussi pour objet un réservoir comprenant un conducteur électrique agencé dans ou sur la paroi du réservoir selon un enroulement en spires et un dispositif de mesure connecté à au moins une extrémité du conducteur, le dispositif de mesure étant configuré pour exécuter les étapes de la méthode de détection de l'état de remplissage d'un réservoir selon l'invention.

D'autres caractéristiques et avantages de la présente invention apparaîtront mieux à la lecture de la description qui suit en relation aux dessins annexés suivants.
[Fig. 1] représente un schéma de principe illustrant le principe de la réflectométrie,
[Fig. 2] représente un réservoir équipé d'un système de détection de l'état de remplissage du réservoir selon un premier mode de réalisation de l'invention,
[Fig. 3] représente un exemple de réflectogramme pour un réservoir vide et un réservoir plein,
[Fig. 4] représente un agrandissement de la zone du pic de fin de câble du réflectogramme de la figure 3,
[Fig. 5] représente un réservoir équipé d'un système de détection de l'état de remplissage du réservoir selon un second mode de réalisation de l'invention,
[Fig. 6] représente un exemple de transférogramme pour un réservoir vide et un réservoir plein,
[Fig. 7] représente un organigramme schématisant les étapes de mise en œuvre d'une méthode de détection de l'état de remplissage d'un réservoir selon l'invention

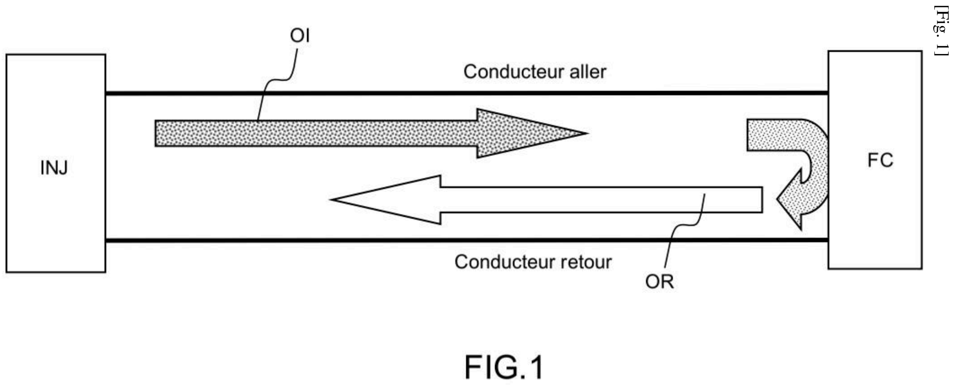

La figure 1 schématise le principe de la réflectométrie appliquée à l'analyse de l'état d'un câble, selon l'art antérieur. Le principe consiste à injecter un signal de forme d'onde maitrisée en un point d'injection INJ du câble. L'onde incidente OI se propage le long du câble jusqu'à rencontrer une discontinuité d'impédance provoquée par l'extrémité du câble FC. Une partie de l'onde est réfléchie vers le point d'injection INJ. A l'aide d'un équipement de mesure le signal réfléchi est mesuré. L'analyse du signal mesuré permet de détecter et localiser un éventuel défaut.

Un corrélateur réalise l'intercorrélation entre le signal généré et le signal reçu afin de produire un réflectogramme temporel R(t). Si le signal de réflectométrie utilisé est une simple impulsion temporelle, le corrélateur peut être rendu optionnel.

Le réflectogramme temporel R(t) comporte un pic d'amplitude caractéristique de la fin du câble à une abscisse temporelle qui est liée à la distance entre le point de mesure du signal et la fin du câble et à la vitesse de propagation du signal dans le câble.

Comme cela est connu dans le domaine des méthodes de diagnostic par réflectométrie, la position d_{FC} de la fin du câble, autrement dit sa distance au point d'injection du signal, peut être directement obtenue à partir de la mesure, sur le réflectogramme temporel, de la durée t_{FC} entre le premier pic d'amplitude relevé sur le réflectogramme et le pic d'amplitude correspondant à la signature de la fin du câble.

Différentes méthodes connues sont envisageables pour déterminer la position d_{FC}. Une méthode possible consiste à appliquer la relation liant distance et temps : d_{FC} = V.t_{FC}/2 où V est la vitesse de propagation du signal dans le câble.

La référence [3] décrit une autre méthode d'analyse des discontinuités d'impédance sur un câble, par transférométrie. A la différence de la réflectométrie, la transférométrie vise à mesurer la partie transmise de l'onde après la discontinuité d'impédance, cette partie correspondant au trajet direct du signal. Dans ce cas, le signal est injecté à une première extrémité du câble et mesuré à l'autre extrémité. De façon similaire, le transférogramme mesuré comporte un pic d'amplitude caractéristique de la fin du câble à une abscisse temporelle qui est liée à la distance entre le point de mesure du signal et le deuxième point de mesure placé à la fin du câble et à la vitesse de propagation du signal dans le câble.

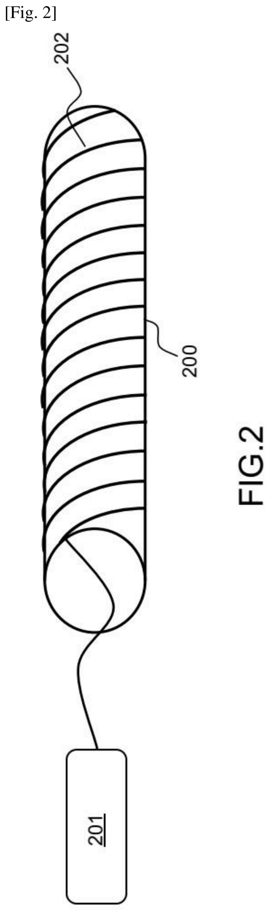

La figure 2 représente un réservoir 200, par exemple de forme cylindrique, comprenant du gaz sous pression ou un liquide. Le réservoir 200 est équipé d'un conducteur électrique 202 agencé sur la paroi extérieure du réservoir selon un enroulement en forme de spires. Le conducteur électrique 202 est connecté à une extrémité à un appareil de réflectométrie 201 configuré pour réaliser une mesure d'un réflectogramme à partir de l'injection et de la mesure d'un signal dans le conducteur électrique. L'appareil de réflectométrie 201 est en outre configuré pour mettre en œuvre une méthode de détection de l'état de remplissage du réservoir selon un premier mode de réalisation de l'invention.

Le conducteur électrique 202 peut être disposé sur la paroi extérieure, à l'intérieur de la paroi ou sur la paroi intérieure du réservoir.

Lorsque le réservoir est rempli sous pression maximale, on constate un allongement du conducteur électrique qui est, par exemple, de l'ordre de 1% de sa longueur.

La mesure de réflectométrie permet de détecter cet allongement en mesurant l'évolution du pic caractéristique de la fin du câble.

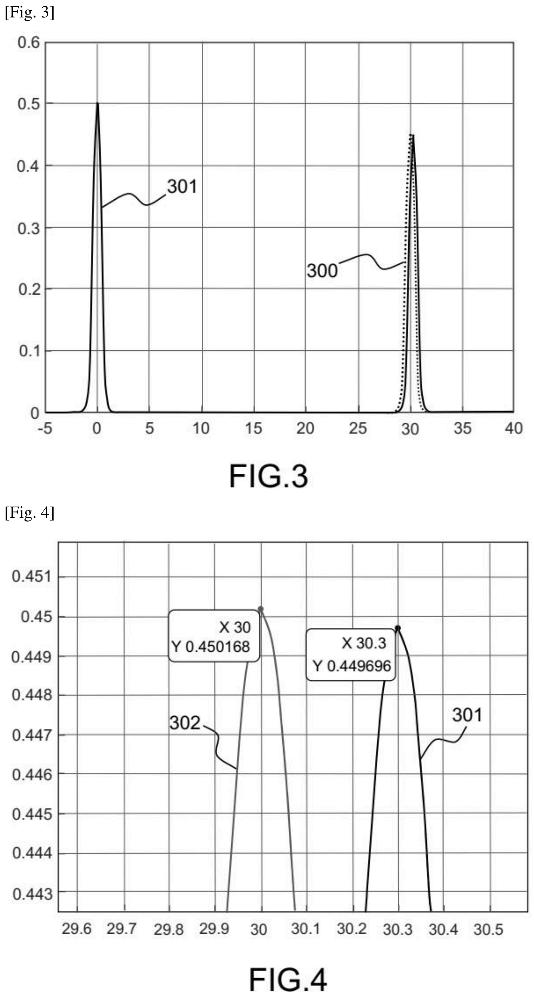

La figure 3 montre un exemple de réflectogramme respectivement pour un réservoir vide (courbe 300) et un réservoir plein (courbe 301) pour un exemple de conducteur électrique ayant une longueur de 30 m.

On constate que lorsque le réservoir est plein, le pic de fin de câble se déplace vers la droite d'une valeur sensiblement égale à 1% de la longueur du câble par rapport au pic de fin de câble mesuré pour un réservoir vide.

Ainsi, l'analyse du pic de fin de câble sur le réflectogramme permet de caractériser l'état de remplissage du réservoir, en particulier si il est vide ou plein.

La figure 4 représente un agrandissement de la figure 3 dans la zone du pic de fin de câble. On peut remarquer à la fois que la position du pic de fin de câble se déplace vers la droite (du fait de l'allongement du câble) mais aussi que l'amplitude du pic diminue (du fait d'une atténuation plus importante liée à la longueur du câble qui augmente).

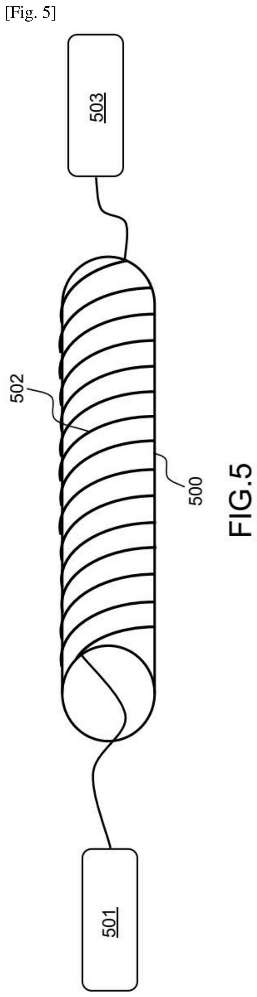

La figure 5 représente un réservoir 500, par exemple de forme cylindrique, comprenant du gaz sous pression ou un liquide. Le réservoir 500 est équipé d'un conducteur électrique 502 agencé sur la paroi extérieure du réservoir selon un enroulement en forme de spires. Le conducteur électrique 502 est connecté à une première extrémité à un émetteur 501 d'un signal de transférométrie configuré pour injecter un signal dans le conducteur électrique 501. Le conducteur électrique 502 est connecté à une seconde extrémité à un dispositif de transférométrie 503 configuré pour mesurer le signal transmis et pour mettre en œuvre une méthode de détection de l'état de remplissage du réservoir selon un second mode de réalisation de l'invention.

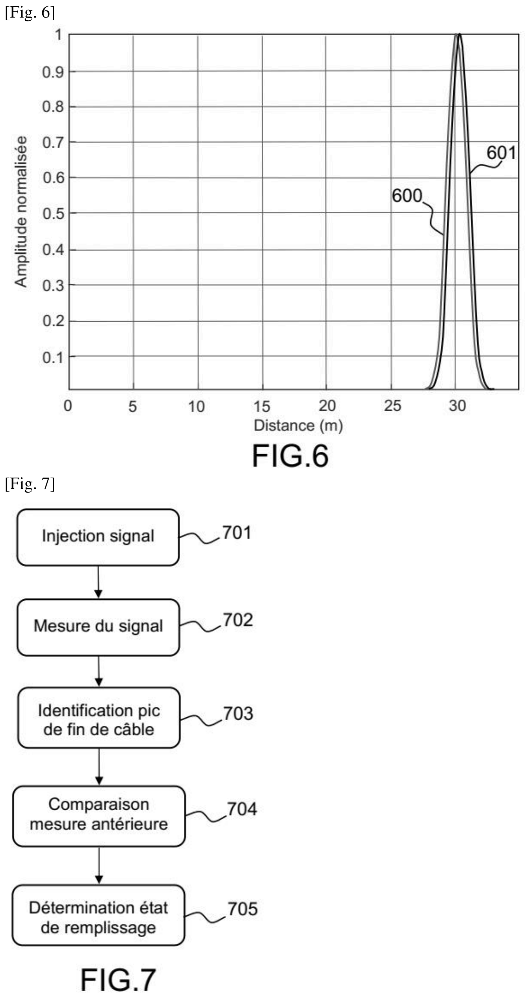

La figure 6 représente pour, les mêmes conditions que les mesures de la figure 3, un transférogramme obtenu respectivement pour un réservoir vide (courbe 600) et pour un réservoir plein (courbe 601). On observe également un pic caractéristique de la fin du câble qui se déplace vers la droite lorsque le réservoir est rempli du fait de l'allongement du câble.

Ainsi, l'invention consiste notamment à détecter le remplissage du réservoir via l'allongement du conducteur au moyen d'une mesure de réflectométrie ou de transférométrie.

La figure 7 illustre sur un organigramme, les étapes de mise en œuvre d'une méthode de détermination de l'état de remplissage d'un réservoir selon un mode de réalisation de l'invention.

La méthode est mise en œuvre au moyen de l'un quelconque des systèmes de détection décrits aux figures 2 ou 5.

A l'étape 701 un signal de réflectométrie ou de transférométrie est injecté à une extrémité du conducteur électrique. Le signal est, par exemple, une impulsion temporelle ou un signal plus complexe, par exemple un signal multi-porteuses.

A l'étape 702, on mesure le signal réfléchi ou transmis dans le conducteur électrique de sorte à générer un réflectogramme du type décrit à la figure 3 ou un transférogramme du type décrit à la figure 6.

A l'étape 703, on identifie, sur le réflectogramme ou le transférogramme, le pic caractéristique de la réflexion du signal sur l'extrémité du câble ou du trajet direct parcouru par le signal entre l'émetteur et le récepteur.

En particulier, on identifie son abscisse temporelle qui correspond à un temps de vol du signal et, optionnellement son amplitude. Dans le cas d'une méthode de réflectométrie, le temps de vol correspond à un trajet aller-retour entre le point d'injection du signal et la fin du câble. Dans le cas d'une méthode de transférométrie, le temps de vol correspond à un trajet direct entre ces mêmes points.

A l'étape 704, on compare le temps de vol mesuré à un temps de vol réalisé sur une mesure antérieure pour le même pic caractéristique de fin de conducteur.

Selon un premier mode de réalisation, la mesure antérieure est une mesure de référence. Elle est par exemple réalisée sur un réservoir vide. A l'inverse, elle peut être réalisée sur un réservoir plein.

L'étape 704 de comparaison consiste à comparer la différence des temps de vol à un seuil prédéfini.

A l'étape 705, on détermine un état de remplissage du réservoir à partir de la comparaison.

Si la mesure de référence correspond à un état vide du réservoir et que le temps de vol mesuré à l'étape 703 est supérieur au temps de vol de référence d'au moins une valeur prédéfinie, on conclut à l'allongement du conducteur et donc à un état rempli du réservoir.

Si la mesure de référence correspond à un état rempli du réservoir et que le temps de vol mesuré à l'étape 703 est inférieur au temps de vol de référence d'au moins une valeur prédéfinie, on conclut au raccourcissement du conducteur et donc à un état vide du réservoir.

La valeur prédéfinie est par exemple de l'ordre de 1% de la longueur totale du conducteur, convertie en temps de vol en fonction de la vitesse de propagation du signal.

Dans une variante de réalisation, la mesure antérieure n'est pas une mesure de référence réalisée pour un réservoir ayant un état de remplissage maitrisé mais une mesure réalisée à un instant antérieur. Dans ce cas, une phase de remplissage du réservoir est détectée à l'étape 705 lorsque le temps de vol mesuré à l'instant courant est supérieur au temps de vol mesuré à l'instant antérieur d'au moins une valeur prédéfinie. A l'inverse, une phase de vidange du réservoir est détectée à l'étape 705 lorsque le temps de vol mesuré à l'instant courant est inférieur au temps de vol mesuré à l'instant antérieur d'au moins une valeur prédéfinie. Un avantage de cette variante est de permettre un suivi continu dans le temps de l'état de remplissage du réservoir.

Dans une autre variante de réalisation, l'étape 704 consiste en outre à comparer l'amplitude du pic caractéristique de fin du conducteur à une mesure d'amplitude antérieure du même pic caractéristique. L'amplitude du pic de fin de conducteur est typiquement plus faible lorsque le réservoir est rempli que lorsqu'il est vide (comme illustré en figure 4).

Ainsi, lorsque l'amplitude du pic mesuré à l'instant courant est inférieure, d'une valeur prédéfinie, à l'amplitude du pic correspondant sur une mesure antérieure, cela est caractéristique d'une phase de remplissage du réservoir voire d'un état rempli. Selon un mode de réalisation de l'invention, la valeur prédéfinie est déterminée en fonction de l'état de vieillissement du matériau constituant la paroi du réservoir.

A l'inverse, si l'amplitude du pic mesuré à l'instant courant est supérieure, d'une valeur prédéfinie, à l'amplitude du pic correspondant sur une mesure antérieure, cela est caractéristique d'une phase de vidange du réservoir voire d'un état vide.

Selon un mode de réalisation de l'invention, la valeur prédéfinie est déterminée en fonction de l'état de vieillissement du matériau constituant la paroi du réservoir.

### Références

[1] OFDR Distributed Strain Measurements for SHM of Hydrostatic Stressed Structures: An Application to High Pressure Hydrogen Storage Type IV Composite Vessels - H2E Project (LSPM, CEA le Ripault) (2014)
[2] Damage localization in hydrogen storage vessel by guided waves based on a real-time monitoring system, Bin Yang, School of mechanical and power engineering
[3] Transferometry : a new tool for complex wired networks diagnosis, F. Auzanneau, Progress in Electromagnetics Research B, vol 70, 87-100,2016

## Revendications

1. Méthode de détection de l'état de remplissage d'un réservoir comprenant un conducteur électrique agencé dans ou sur la paroi du réservoir selon un enroulement en spires, la méthode comprenant les étapes de, à un instant courant :
- Injecter (701) un signal à une première extrémité du conducteur électrique,
- Mesurer (702) le signal après sa propagation dans le conducteur électrique,
- Analyser (703) la mesure du signal pour identifier un pic d'amplitude caractéristique d'une réflexion ou d'une transmission du signal sur une seconde extrémité du conducteur électrique opposée à la première extrémité, mesurer le temps de vol associé audit pic,
- Comparer (704) le temps de vol mesuré à l'instant courant à un temps de vol mesuré sur un même pic d'amplitude pour une mesure réalisée à un instant antérieur,
- Caractériser (705) l'état de remplissage du réservoir à partir de la comparaison des temps de vol.

2. Méthode de détection de l'état de remplissage d'un réservoir selon la revendication 1 dans laquelle l'étape de caractériser (705) l'état de remplissage du réservoir comprend la comparaison de la différence entre le temps de vol mesuré à l'instant courant et le temps de vol mesuré à l'instant antérieur à au moins un seuil prédéterminé.

3. Méthode de détection de l'état de remplissage d'un réservoir selon la revendication 2 dans laquelle la mesure réalisée à un instant antérieur est une mesure de référence réalisée respectivement pour un réservoir vide ou un réservoir rempli.

4. Méthode de détection de l'état de remplissage d'un réservoir selon la revendication 3 comprenant la détection d'un état rempli du réservoir lorsque la mesure de référence est réalisée pour un réservoir vide et le temps de vol mesuré à l'instant courant est supérieur au temps de vol mesuré à l'instant antérieur d'au moins la valeur dudit seuil.

5. Méthode de détection de l'état de remplissage d'un réservoir selon la revendication 3 comprenant la détection d'un état vide du réservoir lorsque la mesure de référence est réalisée pour un réservoir rempli et le temps de vol mesuré à l'instant courant est inférieur au temps de vol mesuré à l'instant antérieur d'au moins la valeur dudit seuil.

6. Méthode de détection de l'état de remplissage d'un réservoir selon la revendication 2 comprenant la détection d'une phase de remplissage du réservoir lorsque le temps de vol mesuré à l'instant courant est supérieur au temps de vol mesuré à l'instant antérieur d'au moins une valeur prédéfinie.

7. Méthode de détection de l'état de remplissage d'un réservoir selon la revendication 2 comprenant la détection d'une phase de vidange du réservoir lorsque le temps de vol mesuré à l'instant courant est inférieur au temps de vol mesuré à l'instant antérieur d'au moins une valeur prédéfinie.

8. Méthode de détection de l'état de remplissage d'un réservoir selon l'une quelconque des revendications précédentes comprenant en outre la comparaison des amplitudes respectives du pic d'amplitude mesuré à l'instant courant et à un instant antérieur, l'état de remplissage du réservoir étant en outre caractérisé à partir de la comparaison desdites amplitudes.

9. Méthode de détection de l'état de remplissage d'un réservoir selon l'une quelconque des revendications précédentes dans laquelle l'étape d'analyser (703) la mesure du signal est réalisée au moyen d'un réflectogramme caractérisant le signal rétro-propagé et mesuré à la première extrémité du conducteur électrique après sa réflexion sur la seconde extrémité du conducteur électrique.

10. Méthode de détection de l'état de remplissage d'un réservoir selon l'une quelconque des revendications 1 à 8 dans laquelle l'étape d'analyser (703) la mesure du signal est réalisée au moyen d'un transférogramme caractérisant le signal transmis à travers le conducteur électrique et mesuré à sa seconde extrémité.

11. Réservoir (200,500) comprenant un conducteur électrique (202,502) agencé dans ou sur la paroi du réservoir (200,500) selon un enroulement en spires et un dispositif de mesure (201,501,503) connecté à au moins une extrémité du conducteur, le dispositif de mesure étant configuré pour exécuter les étapes de la méthode de détection de l'état de remplissage d'un réservoir selon l'une quelconque des revendications précédentes.
